# EUROPEAN PATENT SPECIFICATION

(11) **EP 4 608 878 B1**
(45) Date of publication and mention of the grant of the patent: **30.09.2026**
(21) Application number: 23798706.0
(22) Date of filing: 26.10.2023
(51) Int. Cl.: C08B 30/00, C08B 30/04

(54) **PROCESS FOR PREPARING STARCH HAVING A REDUCED AMOUNT OF CONTAMINANTS**
VERFAHREN ZUR HERSTELLUNG VON STÄRKE MIT REDUZIERTEM ANTEIL AN VERUNREINIGUNGEN
PROCÉDÉ DE PRÉPARATION D'AMIDON AYANT UNE QUANTITÉ RÉDUITE DE CONTAMINANTS

(30) Priority: 27.10.2022 EP 22204038
(43) Date of publication of application: 03.09.2025
(73) Proprietor: Beneo, Remy, 3018 Leuven-Wijgmaal (BE)
(72) Inventor: BRUGGEMAN, Geert, 9220 Hamme (BE); CARTARIUS, Ralph, 74254 Offenau (DE); DE VLEESCHOUWER, Kristel, 3018 Wijgmaal (BE); GILISSEN, Patrick, 3018 Wijgmaal (BE); LEVECKE, Bart, 2860 Sint-Katelijne-Waver (BE); TAMANTINI, Dominik, 67283 Obrigheim/Pfalz (DE)
(74) Representative: Van den Bremt, Karen Marie Jos
(86) International application number: PCT/EP2023/079997
(87) International publication number: WO 2024/089209

(56) References cited:
- WO-A1-2022/159719

## Description

### FIELD OF THE INVENTION

The invention relates to a process for preparing starch having a reduced amount of contaminants. The starch composition having the reduced amount of contaminants may alternatively be referred to as a purified starch composition.

### BACKGROUND

Starch is widely used in the food manufacturing industry, for instance as food thickener or stabilizer. Starch may come in different forms and the present invention is not limited to any particular type of starch.

Starch may also be chemically and/or physically modified to provide an improved process tolerance or better properties.

The term physically modified starch includes starches that have been subjected to a heat/moisture treatment, to annealing, to thermal inhibition, to alkaline roasting, and the like. Physically modified starch, such as thermally inhibited starch, has the advantage of not being regarded as chemically modified starch. These do not need to be labelled with a European Union 'E' number or equivalent, such as the INS number in the US and can thus be part of a 'clean label' approach to food product ingredients.

Chemically modified starches may include, without being limited thereto, crosslinked starches, acetylated starches, hydroxyethylated and hydroxypropylated starches, inorganically esterified starches, cationic, anionic, oxidized starches, zwitterionic starches, and combinations thereof. During manufacturing of such chemically modified starch compositions, chemicals may be used to obtain a certain desired effect or property, such as cross-linking for instance. Starch, whether modified or not, may also contain contaminants that are not added deliberately.

Starch may also be modified by enzymes.

As used herein, the term contaminant indicates a compound, the presence of which in starch is undesirable in view of (potential) uses of the starch, irrespective of the nature of the properties of the compound as such.

A relatively high level of contaminants is undesirable since this may affect useful properties negatively. For instance, rheological properties may be affected, both in terms of stability of the starch at higher temperatures, as well as its viscous behaviour after it has been subjected to relatively high levels of shear or low pH, such as may occur during preparation of food products.

To remove contaminants at least partially, starch, for instance bleached starch or thermally inhibited starch, may be subjected to a washing step that leads to the forming of a slurry, which slurry must then be dried, as starch is usually provided to the market in powder form.

WO 2022/159719 relates to a process of dry milling and wet milling for producing starch, especially a pure starch slurry. Separation of the starch/gluten slurry is performed using a nozzle centrifuge. The obtained starch fraction is further washed using a multiple-stage counter current starch washing process with starch washing hydrocyclones.

EP 0486260 relates to a disc-nozzle centrifuge that is provided with a return conduit for recycling the underflow. The removal of impurities from starch modified by treatment with sodium sulfate and starch modified by treatment with hydrochloric acid is described.

It is a disadvantage of the known process that the washing/slurry formation and subsequent drying can also lead to a partial loss of the properties that were present in the starch or conferred upon the starch by modification. One such property is the so-called shear stability, i.e., the ability of a thermally inhibited starch to provide a high viscosity in food products such as sauces where the preparation process entails exposure to high levels of shear.

It is an objective of the present invention to provide a process for the preparation of purified starch wherein the partial loss of properties is reduced or even avoided. Furthermore, it is an object of the present invention to provide a process for the preparation of purified starch with an improved efficiency of contaminant removal and/or a reduced consumption of water and/or energy.

### SUMMARY OF THE INVENTION

It would further be desirable to provide an improved process for the preparation of starch having a reduced amount of contaminants and/or a reduced loss of desired functional properties. The improvement may for instance reside in the efficiency of the removal of the contaminants, in terms of the amount of contaminants that may be removed and the consumption of certain consumables such as energy, washing waters and the like.

According to the invention, there is provided a process for the preparation of starch in accordance with claim 1. The invented process comprises the steps of:
a) providing a slurry containing a granular starch and contaminants, and having a pH between 5.0 and 11.0;
b) washing the contaminants out of the slurry with water in a plurality of nozzle centrifuges provided in series, wherein the slurry is added to a first centrifuge of the series, and fresh wash water is added to a last centrifuge of the series; and wherein each nozzle centrifuge separates an incoming slurry flow in a light fraction that comprises wash water and a washed out part of the contaminants, and a heavy fraction that comprises starch and a non-washed out part of the contaminants.

It has been shown that washing the slurry in a plurality of nozzle centrifuges as claimed, and at a pH of the slurry that is lower than a threshold value, as claimed, not only provides an improved efficiency in removing contaminants from the slurry but may also reduce a partial loss of properties or even avoid such loss.

As meant herein, the plurality of nozzle centrifuges includes nozzle centrifuges wherein a washing out of the contaminants occurs, at least partly. The last centrifuge of the series therefore is the last nozzle centrifuge in which washing out takes place. Other centrifuges or separation devices may be included in the claimed process for other purposes than washing out. Such centrifuges or separation devices are not included in the series of nozzle centrifuges.

As used herein, the terms 'substantially', 'essentially', 'consist(ing) essentially of, 'essentially all' and equivalents thereof have, unless noted otherwise, in relation to a composition or a process step the usual meaning that deviations in the composition or process step may occur, but only to such an extent that the essential characteristics and effects of the composition or process step are not materially affected by such deviations.

As used herein, the term 'is brought to' or equivalents thereof in relation to a parameter such as for example the pH or the moisture content of a system has the meaning that the parameter may be caused to increase, to decrease, or to remain unchanged - depending on the specific circumstances.

The raw starch may be obtained from any native source. Unless specifically distinguished, references to starch in this description do not include their corresponding flours, which still contain some proteins, for instance a protein content of > 4 wt.% relative to the weight of the flour, such as wheat gluten for instance. Typical sources for the starches are cereals, tubers, roots, legumes, fruit starches and hybrid starches. Suitable sources include but are not limited to corn, quinoa, pea, potato, sweet potato, sorghum, banana, barley, wheat, rice, sago, amaranth, tapioca, arrowroot, canna. A preferred source is rice. Suitable starches may also be derived from a plant obtained by breeding techniques including crossbreeding, translocation, inversion, transformation or any other process of gene or chromosome engineering to include variations thereof. In addition, starch derived from a plant grown from artificial mutations and variations of the above generic composition, which may be produced by known standard methods of mutation breeding are also suitable herein.

In an embodiment of the claimed process the starch is selected from the group of potato starch, maize (corn) starch, tapioca starch, barley starch, rice starch, wheat starch, rye starch, oat starch, amaranth starch, quinoa starch, sago starch, bean starches, pea starch, waxy potato starch, waxy corn starch, waxy tapioca starch, waxy barley starch, waxy rice starch, waxy sorghum starch, waxy wheat starch, waxy pea starch, and high amylose starches, or a combination of two or more of these.

According to the invention, a slurry is provided containing a granular starch and contaminants and having a pH from 5.0-11.0. The slurry may be provided in any known way. For instance, the slurry may be provided by a slurrying step in which dry starch powder is combined with an aqueous phase to form the slurry. The slurry may also be provided as a result from a process for making the starch. For instance, an extraction step in such starch-making process can yield a suitable slurry for use in the presently claimed process. The term slurry as meant herein has the usual meaning of a system having a liquid as continuous phase and containing solid particles, while still being able to flow and being transported in similar fashion as a liquid when being at a temperature between 5°C and 60°C. The maximum temperature of 60°C may for some starches, such as rice starch, be too high because of a risk of gelatinization. In such cases, the maximum temperature may be 50°C or even 40°C. The maximum weight percentage of solid particles that can be comprised in the slurry while still maintaining the characteristics of flowability and transportability will - as is known - depend on the precise nature of the particles. In the case of thermally inhibited or chemically modified starch, it is preferred that the solids content of the slurry lies between 5 and 60, more preferably between 5 and 40 wt.%, even more preferably between 10 and 35 wt.%, and most preferably between 15 and 30 wt.%. A preferred slurry comprises rice starch having a solids (or dry matter DM) content of between 10 and 30 wt.%.

The starch preferably constitutes a substantial part of the material present in the slurry. Besides the contaminants, the starch may be present in the form of a mixture with other compounds. In case of a mixture, the starch is the largest dry matter constituent in the mixture, preferably representing at least 40, 50, 60, 70, 80, 90, or at least 95% of the mixture present in the slurry. Examples of possible other compounds in the mixture are starches that are differently modified than the main starch, small quantities of pregelatinized starch, other carbohydrates and lipids, albeit at low level. As already mentioned above, suitable starches may contain residual amounts of proteins, such as lower than 4 wt. % relative to the total weight of the starch in dry form, preferably lower than 1 wt.%.

The slurry may be provided, for instance by a slurrying step, before the actual washing step. The slurry may also ensue from the starch-making process, as known to one skilled in the art.

The liquid or aqueous phase in the slurry preferably has water as its continuous phase and main constituent. Other compounds besides water may be present, and indeed will be the case in for example an industrial application of the invention where use is made of process water or other on-site available and suitable water streams. The same applies to the claimed washing step, that will be explained further below. It is preferred that the aqueous phase is essentially free, preferably free of other solvents such as ethanol. The aqueous phase preferably contains at least 80, 85, 90, or even at least 95, 96, 97, or 98 wt.% water. In an embodiment of the invention, the aqueous phase consists essentially of water, or even consists of water.

The temperature of the aqueous phase can vary within a wide range, and is preferably between 5 and 50°C, more preferably between 10 and 30°C or even between 15 and 25°C. This holds for the step of providing the slurry, as well as for the washing step. The starch preferably remains in native / granular state during its preparation. In such case the temperature of the slurry during preparing it but also during washing preferably remains below the gel point of the starch. Since the precise gel point of a starch in a slurry depends on various parameters, the gel point as meant herein is the temperature such that afterwards no significant gelatinization, or even no gelatinization at all can be observed - as evidenced by the presence of the well-known Maltese cross when seen under a microscope with polarized light, preferably when the starch grains have been stained with iodine. In a preferred embodiment it is ensured that the temperature of the slurry does not exceed 60°C, more preferably does not exceed 50°C during preparing it and during the washing step. If needed, cooling means may be provided.

The contaminants in the slurry may be present in solution in the liquid continuous phase and/or they may be present as undissolved solid particles. The contaminants in the context of the present invention may comprise all components that may be present in the raw source material of the starch (occurring naturally or not), such as heavy metals, pesticides, etc., but excluding a protein fraction as well as a fiber fraction, both of which have been removed to a substantial degree previously to the presently claimed process. Further included in the definition of contaminants in the context of the present invention are (residual) components of chemical auxiliary agents or excipients that have been used during the starch production process, prior to the claimed method, such as chlorate, chloride, acetic acid, .... Other chemical modifying agents such as phosphorus oxychloride, sodium trimetaphosphate, acetic anhydride, succinic anhydrides, propylene oxide, hydrochloric acid, sulfuric acid, hydrogen peroxide, sodium hypochlorite, calcium hypochlorite, and the like are also included in the definition of contaminants. The above-mentioned chemical auxiliary and/or modifying agents may have been at least partly consumed in chemical reactions occurring during the starch production process, which chemical reactions may also produce reaction products of said agents. The contaminants therefore may also include the reaction products of said agents.

It is further noticed that when using the wording 'starch' in the present application, this is meant not to include 'flour'. As is known, starch may contain residual amounts of proteins.

According to the invention, the slurry is provided such that it has a pH from 5.0 to 11.0. This may be achieved by bringing the pH of the aqueous phase, prior to it entering the slurrying step, to a value such that the required pH value of the slurry is reached. Alternatively, the required pH of the slurry may be achieved by adjusting the pH of the slurry after it has been formed, preferably immediately after it has been formed. It is also possible to first adjust the pH of the aqueous phase and then adjust the value of the pH of the slurry as well.

Adjustments of pH are as such well known to the person skilled in the art and can be achieved by for example the addition of a base such as sodium hydroxide or an acid such as sulphuric acid or by means of a buffer such as a citrate buffer.

As used herein, the pH of solid materials like the starch is determined at 21°C and as follows: test material to be measured is added to a beaker containing at least 100 ml of demineralized water, followed by stirring so as to form a slurry. The amount of test material is chosen such that the dry matter content of the slurry is 24 wt.%. The pH of the slurry is then measured by using a standard pH measuring device which has been calibrated. The pH as measured is deemed to be the pH of the test material.

The pH of the slurry according to the invention should be at least 5.0, and in preferred embodiments the pH of the slurry is at least 6.0, 6.5 or even at least 7.0, to promote removal of the contaminants.

The pH of the slurry according to the invention should be at most 11.0 as it was found that a beneficial effect on the properties of the slurry-dried starch occurs when the pH of the slurry is below 11.0. More preferably the pH of the slurry is at most 10.5, 10.0, 9.5, or even at most 9.0.

Preferably, pH of the slurry according to the invention is in a range of from 6.5 to 10.5, more preferably from 7.5 to 10.0, most preferably from 8.5 to 9.5.

According to the invention, use is made of a plurality of nozzle centrifuges stages arranged in series for performing a continuous washing process. The particulate feedstock (granular starch) together with a liquid medium such as water - forming the slurry -, also containing the (dissolved) contaminants, is fed into a first nozzle centrifuge and (fresh) wash water is continuously fed into the last nozzle centrifuge of the series. As has already been disclosed above, the series of nozzle centrifuges is defined as being limited to centrifuges in which washing is carried out. Other centrifuges or separation devices that do not wash out may however be used additionally. The wash water preferably flows in countercurrent flow with the flow of the slurry to remove part of the contaminants.

Although wash water is continuously fed into the last nozzle centrifuge of the series, this does not rule out that wash water is further added to another but the last nozzle centrifuge of the series.

A nozzle centrifuge, also called disc-nozzle centrifuge, is a device to classify/separate or sort particles in a liquid suspension or slurry based on the densities of the particles. A nozzle centrifuge usually has a closed body, for instance of metal (mostly steel), ceramic, or plastic, comprising a conical section, i.e. the separation chamber, provided with a stack of rotatable separating discs forming separation channels. The body is rotated at high speed around a central rotation axis. The slurry containing starch and the contaminants is typically fed from the top and led to the separation channels in which the slurry to be washed is advanced outwardly under the action of centrifugal forces, generated by the rotation. The angle and length of the conical section may influence operating characteristics. Water is typically fed from the bottom of the body and forced to flow into the separating channels in countercurrent flow to the slurry. The nozzle size - for instance between 1.0 and 2.5 mm - of the nozzles through which the purified starch slurry leaves the separating channels may also influence operating characteristics, such as the wash water flow provided (in m³/h). The water flowing in countercurrent fashion with the slurry in the separation channels at least partially removes the contaminants from the slurry, and the water that now also contains contaminants exits through a wash water outlet, typically provided at the top of the centrifuge body and situated at an end of the separation channels in fluid connection therewith. The at least partially purified slurry exits the separation channels through a common purified slurry outlet in fluid connection with the separation channels via the nozzles. The nozzle centrifuge is thus able to separate an incoming slurry flow in a light fraction that comprises wash water and a washed-out part of the contaminants, and a heavy fraction (also denoted in this application as heavy phase) that comprises starch and a non washed-out part of the contaminants. The light fraction leaves the nozzle centrifuge through the wash water outlet (also referred to as the light fraction outlet). The heavy fraction leaves the nozzle centrifuge through the purified slurry outlet (also referred to as the high fraction outlet). The light fraction may contains small amounts of starch; these small amounts are typically treated as losses.

Although other types of separators are available, such as hydrocyclones for instance, the claimed process uses nozzle (or disc-nozzle) centrifuges. These have been shown to be superior in achieving the aims of the present invention, i.e. providing efficient removal of contaminants from a starch slurry and yet retaining desirable properties of the ensuing starch, optionally after drying.

The concentration of solids in the slurry provided, and further parameters, such as centrifuge dimensions, outlet and nozzle dimensions, water feed pressure and the relative characteristics of the starch particles and the liquid, may all or separately have an effect on the efficiency of the process. It has however been discovered by the inventors that certain parameters have an overriding influence on the separation, as will be further elucidated below.

For instance, in a preferred embodiment, a process is provided wherein a nozzle diameter of at least one of the nozzle centrifuges, and preferably all of the nozzle centrifuges, ranges from 1.0 to 4.0 mm, more preferably to 2.6 mm, even more preferably from 1.4 to 2.2 mm and most preferably from 1.6 to 2.0 mm. These ranges are particularly preferred when using rice starch slurry as feed to the series of nozzle centrifuges. It should be noted further that the nozzle size may depend on the desired washing capacity and the dry matter content of the slurry. The higher the desired washing capacity and the dry matter content of the slurry, the larger the nozzle size may be selected.

More in particular, a preferred embodiment of the invention relates to a process wherein a ratio of the total wash water flow added to at least one of the centrifuges, preferably to the last centrifuge, in m³/h to the dry matter (DM) starch flow in T/h (Ton per hour) added to the first centrifuge is at least 0.1 m³/T and at most 5 m³/T, more preferably at most 4.5 m³/T, and most preferably at most 4 m³/T. It has been established that such limited wash water flows allow a substantial removal of the contaminants from the starch slurry in a relatively limited number of nozzle centrifuges, such as 3 or 4 for instance. Preferred minimal ratios of wash water flow added to the last centrifuge in m³/h to the dry matter (DM) starch flow in T/h added to the first centrifuge are 0.5 m³/T, more preferably 1 m³/T, even more preferably 1.5 m³/T and most preferably 2 m³/T. As disclosed above, the total wash water flow may be added to the last centrifuge, which is preferred, but may also be added to any combination of two or more centrifuges of the series, including the last centrifuge.

More in particular, it has been established that, in a preferred embodiment of the invention, a normalized water ratio defined as the total wash water flow added to at least one of the centrifuges, preferably to the last centrifuge, in m³/h divided by the dry matter starch flow in T/h and the amount of centrifuges used is preferably between 0.2-2.0, more preferably between 0.25-1.75. This provides an optimum combination of the used water flow (which should be as low as possible), the production rate (the amount of dry matter starch that may be added to the process, and that should be as high as possible), and the number of centrifuges used. The specific value of the normalized water ratio may be tuned taking account of the value of the pH of the incoming slurry.

In an embodiment of the invention, a process is provided wherein the pH of the slurry is adjusted prior to entering a first centrifuge.

Another embodiment relates to a process wherein the pH of the slurry is adjusted before entering a random nozzle centrifuge of the series other than the first one, more preferably before entering any nozzle centrifuge of the series other than the first one.

Another preferred embodiment relates to a process as claimed wherein the number of nozzle centrifuges in the series is from 2-8, more preferably from 3-7.

According to the invention, the nozzle centrifuges are provided in series. This entails fluidly connecting the heavy fraction outlet of a centrifuge of the series to the slurry inlet of the centrifuge that is positioned next in the series. In this way, the heavy fraction exiting a previous centrifuge may be purified further in the next centrifuge. In another embodiment, the heavy fraction may be diluted before or during entering the next centrifuge. Positioning in series may also entail fluidly connecting the light fraction outlet of a centrifuge of the series to the wash water inlet of the centrifuge positioned just before said centrifuge in the series.

In an embodiment of the process therefore, wash water of at least one but the last nozzle centrifuge originates from the light fraction of a subsequent nozzle centrifuge, preferably solely originates from the light fraction of a subsequent nozzle centrifuge.

In another embodiment of the process, wash water of all but the last nozzle centrifuge originates from the light fraction of a subsequent nozzle centrifuge, preferably solely originates from the light fraction of a subsequent nozzle centrifuge.

It should be noted that wash water of the last nozzle centrifuge may originate from a number of sources, such as the water network, one or more containers, for instance containing process water, or tubing that is connected to other parts of an industrial environment. It may be beneficial in an embodiment to provide a process wherein the wash water added to the last nozzle centrifuge is passed through an ion exchange resin to lower the amount of ions present in the water, such as Ca²⁺ and Mg²⁺ ions. This may prevent or at least hinder corrosion, such as but not limited to deposition of calcium on walls of reactors, centrifuges and/or conduits used in the claimed process.

It may also be possible to characterize the process in that fresh wash water not originating from one of the centrifuges is added to at least one nozzle centrifuge other than the last nozzle centrifuge. This may further improve removal of the contaminants, in particular - but not limited to - when using a relatively low number of nozzle centrifuges, such as 2-4.

Preferably, the wash water is added to each nozzle centrifuge in countercurrent flow to the flow of stabilized starch slurry entering the nozzle centrifuge.

To further increase the efficiency of separation in each nozzle centrifuge, but also for the complete process, an embodiment of the invention relates to a process wherein the slurry added to the first centrifuge and the heavy fraction coming from a nozzle centrifuge entering a subsequent nozzle centrifuge is diluted with diluent water before entering the subsequent nozzle centrifuge.

In yet another preferred embodiment, the diluent water before entering at least one nozzle centrifuge originates from the light fraction of a subsequent nozzle centrifuge, preferably solely originates from the light fraction of a subsequent nozzle centrifuge. More preferably, the diluent water before entering all the nozzle centrifuge originates from the light fraction of a subsequent nozzle centrifuge, preferably solely originates from the light fraction of a subsequent nozzle centrifuge.

The degree of dilution may be adjusted between wide limits. However, a process wherein the slurry added to the first centrifuge and the heavy fraction coming from a nozzle centrifuge entering a subsequent nozzle centrifuge is diluted to a percentage dry matter of between 5-30%, more preferably of between 8-20%, and most preferably of between 10-15%, has been shown to yield an improved efficiency.

As already disclosed earlier, it is beneficial to the process to provide an embodiment wherein the washing is carried out at a temperature between 5 and 50°C, more preferably between 5 and 40°C, even more preferably between 10 and 30°C, or even between 15 and 25°C.

After the washing step, a drying step may be performed to obtain the starch. In an embodiment of the invention, a process is provided wherein the slurry after washing is dried and optionally milled to obtain the starch.

In the optional drying step, at least a portion of the aqueous phase of the purified slurry that has exited form the last centrifuge is separated off from the starch. This can be achieved via one or more operations that are known as such.

As meant herein, the meaning of the term drying step includes not only operations that primarily rely on dewatering via physical force/displacement, such as centrifuging or filter pressing, but also includes operations that primarily rely on evaporative dewatering, such as spray drying, flash drying, or oven drying. In a preferred embodiment of the invention the drying step consists of a combination of two or more operations, for example a combination of one or more operations primarily relying on dewatering via physical force/displacement and one or more operations primarily relying on evaporative dewatering.

The one or more operations in the drying step are preferably carried to such an extent that starch having a moisture content lying between 5 and 30 wt.% is formed. In another embodiment of the invention the drying step is executed such that essentially no gelatinization takes place. Preferably the invention relates to a process for the preparation of starch in granular form comprising the washing and drying step as outlined above in one operation.

Upon completion of the optional drying step, the starch is typically recovered and processed further, for example by packaging the starch.

It has been found that by applying the process of the present invention for preparing purified starch, an efficient removal of contaminants from the starch may be obtained while keeping the loss of properties, such as shear stability, of the starch limited. Thanks to the process of the present invention, there may be an efficient usage of wash water and energy.

### DETAILED DESCRIPTION OF THE INVENTION AND EXAMPLES

The invention will now be described in more detail by referring to the figures, without however being limited thereto. In the figures:
Figure 1 represents a schematic cross-sectional view of a nozzle centrifuge as used in accordance with an embodiment of the invented process; and
Figure 2 represents a schematic flow sheet of a process in accordance with an embodiment of the invention.

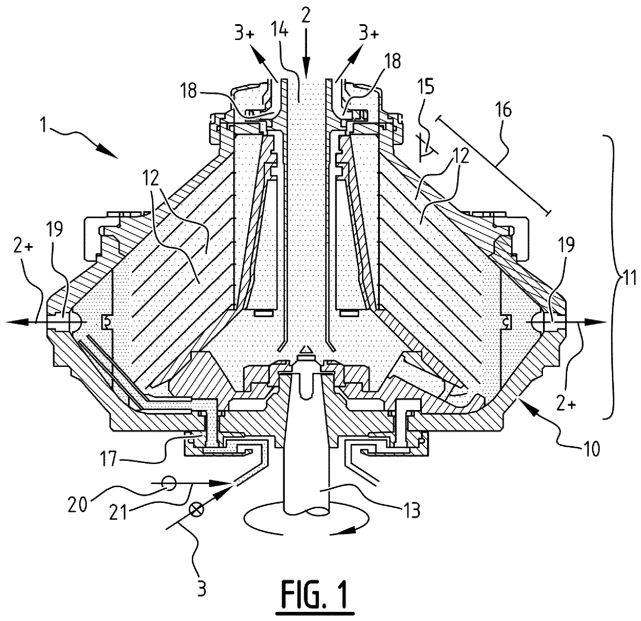

With reference to figure 1, a nozzle centrifuge 1 (also referred to as Cₓ) is schematically shown. The nozzle centrifuge 1 comprises a substantially closed steel body 10, comprising a conical section 11 provided internally with separation channels 12. The body 10 is rotated at high speed around a central rotation axis 13. The slurry 2, containing starch and the contaminants, is typically fed from the top through a slurry inlet 14 and led to the separation channels 12 in which the slurry 2 to be washed is advanced outwardly under the action of centrifugal forces, generated by the rotation. The angle 15 and length 16 of the separation channels 12 may be selected to influence operating characteristics. Wash water 3 is typically fed from the bottom of the body 10 through a wash water inlet 17 and forced to flow - through pumps that are not shown - into the separating channels 12 in countercurrent flow to the slurry 2. The water 3 flowing in countercurrent fashion with the slurry 2 in the separation channels 12 at least partially removes contaminants from the slurry 2, and the water 3+ that now also contains contaminants, or at least an increased concentration of contaminants, exits through a wash water outlet 18, typically provided at the top of the centrifuge body 10 and situated at an end of the separation channels 12 in fluid connection therewith. The at least partially purified slurry 2+ exits the separation channels 24 through a common purified slurry outlet or nozzles 19 in fluid connection with the separation channels 12. The nozzle centrifuge 1 is thus able to separate an incoming slurry flow 2 in a light fraction that comprises wash water and a washed-out part of the contaminants, and a heavy fraction that comprises starch and a non washed-out part of the contaminants. The light fraction leaves the nozzle centrifuge 1 through the wash water outlet 18 (also referred to as the light fraction outlet). The heavy fraction leaves the nozzle centrifuge 1 through the purified slurry outlet or nozzles 19 (also referred to as the heavy fraction outlet).

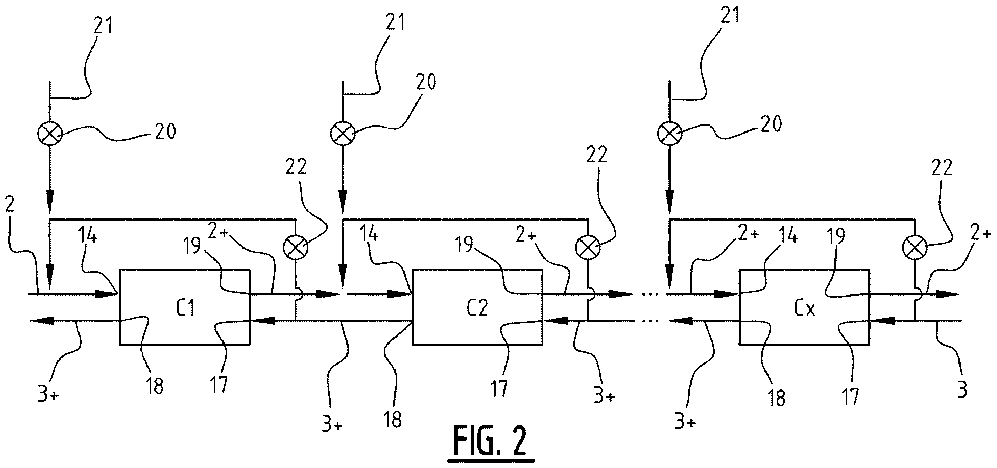

Referring to figure 2, a process flow scheme according to an embodiment of the invention is schematically shown. The process comprises washing the contaminants out of an incoming slurry 2 with water 3 in a plurality of nozzle centrifuges Cₓ provided in series. Herein, 'x' corresponds to the desired number of centrifuges with x ranging from 2 to 20 for instance. The slurry 2, which is preferably diluted, is added to a first centrifuge C₁ of the series, and wash water 3 is added to a last centrifuge Cₓ of the series. As disclosed above, each nozzle centrifuge Cₓ separates an incoming slurry flow 2 in a light fraction 3+ that comprises wash water and a washed out part of the contaminants, and a heavy fraction 2+ that comprises starch and a non-washed out part of the contaminants.

As shown in figure 2, the plurality of nozzle centrifuges Cᵢ is provided in series, wherein i = 2 to x. This entails fluidly connecting the heavy fraction outlet 19 of a centrifuge Cᵢ of the series to the slurry inlet 14 of the centrifuge Cᵢ₊₁ that is positioned next in the series. For instance, the heavy fraction outlet 19 of the first centrifuge C₁ of the series is fluidly connected to the slurry inlet 14 of the centrifuge C₂ that is positioned next in the series. In this way, the heavy fraction 2+ exiting a previous centrifuge Cᵢ may be purified further in the next centrifuge Cᵢ₊₁. The plurality of centrifuges Cᵢ is further arranged such that the light fraction outlet 18 of a centrifuge Cᵢ₊₁ of the series is fluidly connected to the wash water inlet and nozzles 17 of the centrifuge Cᵢ positioned just before said centrifuge Cᵢ₊₁ in the series.

In the embodiment shown, wash water of at least one centrifuge Cᵢ but the last nozzle centrifuge Cₓ originates from the light fraction 2+ of a subsequent nozzle centrifuge Cᵢ₊₁, preferably solely originates from the light fraction 2+ of a subsequent nozzle centrifuge Cᵢ₊₁. As shown in figure 2, wash water of centrifuge C₁ originates from the light fraction 3+ of a subsequent nozzle centrifuge C₂.

As shown in figure 1 however, each nozzle centrifuge Cᵢ may also be equipped with an additional water inlet 20 to introduce additional water 21 into said nozzle centrifuge Cᵢ.

The wash water that is entered into the last nozzle centrifuge Cₓ may originate from a number of sources, such as the water network, one or more containers, for instance containing process water, or tubing that is connected to other parts of an industrial environment.

To further increase the efficiency of separation in each nozzle centrifuge Cᵢ, the slurry 2 added to the first centrifuge C₁ and the heavy fraction 2+ coming from a nozzle centrifuge Cᵢ entering a subsequent nozzle centrifuge Cᵢ₊₁ may be diluted with diluent water before entering the subsequent nozzle centrifuge Cᵢ₊₁. This water may for instance be introduced through the inlet 20 (water flow 21) or through the inlet and nozzles 17, which flow is regulated by valves 22. In the latter option, the diluent water before entering the nozzle centrifuge Cᵢ originates from the light fraction 3+ of a subsequent nozzle centrifuge Cᵢ₊₁, preferably solely originates from the light fraction 3+ of a subsequent nozzle centrifuge Cᵢ₊₁. The degree of dilution may be adjusted and is preferably diluted to a percentage dry matter of between 5-30%, more preferably of between 8-20%, and most preferably of between 10-15%.

### EXAMPLES

Several starch slurries were prepared. Thereto, a rice starch that was found to have an undesirable high level of certain contaminants was used to form a slurry, using industrial process water as circulating in a starch modification facility as aqueous phase. The process water had a pH of 7.5-8.0. The weight ratio between aqueous phase and rice starch was adjusted to different values. The pH of the slurry was also adjusted to different values. The slurries were washed in the plurality of centrifuges.

For obtaining starch properties, the purified slurry after washing was subsequently de-watered by means of filtration under vacuum. The obtained filter cake was further dried to an average moisture content of 12wt.% to form a slurried-dried starch by means of drying using a fluid bed dryer at a maximum air temperature of 50°C.

Certain properties of the slurried-dried starch were determined by preparing a gel with the slurried-dried starch. The gel was prepared at 94°C and 300 rpm in a Stephan UMSK 5 cooker equipped with a mixing insert having two rounded blades, using 135 g (dry matter) starch, citric acid and trisodium citrate to acidify and buffer to pH 3.6, and sufficient water to obtain a total weight of 2,500 g, whereby the citric acid and trisodium citrate were combined with the water before the starch was added. After cooling to 25°C, an intensive shearing action on the gel was done by means of a Silverson L4RT mixer using a square hole (2.4 mm) high shear screen mixer head at 5,000 rpm during 1 minute.

The tan δ of a gel, made from the starch concerned, that had first been subjected to an intensive shear action, was determined at a temperature of 20°C by means of an Anton Paar Rheometer (parallel plate- plate configuration; the plate diameter was 40 mm). As meant herein, the term tan δ is used in its common meaning of being a loss tangent in the linear viscoelastic region. It gives a ratio between viscous and elastic properties of a system, showing which one is dominant. With a tan δ value of 1, the elastic and viscous properties of the material are equal. The smaller the loss tangent, the more elastic is the material. The tan δ was determined from the results of an amplitude sweep measurement having the following characteristics: deformation from 0.01 to 1000%, frequency 1 Hz.

Other properties were obtained on the same slurried-dried starch, such as Brabender viscosities during a temperature sweep according to the following methodology: the Brabender curve was determined at 6 wt.% dry matter in deionised water brought to pH 6.0-6.5 with sulphuric acid; the total weight was 500 g, the measuring speed was 75 rpm. The applied temperature profile starts at 50°C, going up to about 95°C at 3°C/min, staying at about 95°C for 15 minutes, followed by cooling to 20°C at 3°C/min. From the resulting viscosity profile, the delta 95 value is calculated by subtracting the viscosity at the start of the 95°C interval from the viscosity at the end of the 95°C interval.

The prepared slurries were subjected to washing in a plurality of nozzle centrifuges and the amount of contaminants determined after each nozzle centrifuge stage (denoted as HP1, HP2, HP3, HP4 and so on.). The acronym HP stands for 'heavy phase', which is also denoted as heavy fraction 2+ in the figures. The contaminant concentration is measured in this heavy phase.

The pH, Baumé, and dry matter content (DM) of the incoming slurry (before dilution) entering the first centrifuge were measured according to the following methods:
- The pH of the slurries was determined under gentle stirring using a WTW 3210 pH meter with combination electrode WTW SenTix 81.
- The Baumé of the starch slurries was determined by inserting a Baumé meter (measuring range 10-20 Baumé) in a cylinder of 500mL which was filled up to the top with the slurry. After stabilizing of the Baumé meter, the value was read from the scale on the meter.
- The dry matter content (DM) was analysed by means of an infrared moisture balance at 130°C.

The concentration of three contaminants - namely chlorate, chloride and sulphate - in the slurry flow was measured by taking samples after each centrifuge stage HPᵢ. Chlorate concentration was measured by means of LC-MS/MS after a formic acid methanolic extraction according to the EURL-SRM method QuPPe-PO. Chloride and sulphate concentrations were measured according to DIN EN ISO 10304-1:2009-07, a test method for the determination of inorganic anions (chloride, nitrite, nitrate, phosphate, sulphate and oxalate) using ion chromatography (IC). The content of inorganic anions is given in mg/kg or mg/L, and the percentual reduction after washing in % was calculated. According to the principles of the method the inorganic anions are separated by elution on a latex anion exchange column and detected conductometrically after suppression. The concentration gradient required for the separation of the components is automatically generated by an eluent generator integrated in the IC system.

For sample preparation, solutions were prepared by weighing in the samples or by dilution. The dry substance content of the solution should not be higher than 10 g/100 g. The sample solutions were then diluted as required. From these sample solutions further dilution steps were then carried out as required in order to be able to carry out the measurement within the calibration range of the components.

For a thick juice obtained after the washing as claimed, samples were prepared by weighing a 10 g sample into a 100 mL volumetric flask, mixing with ultrapure water and filling up to the mark at 20 °C. Further dilutions were then prepared. (1:10 and 1:20 dilutions).

The following chromatographic conditions were used:
- Eluent: potassium hydroxide Gradient:
   - 0.0 - 2.0 min: 1.0 mM KOH
   - 2.0 - 16.0 min: from 1.0 mM to 40.0 mM KOH
   - 16.0 - 16.1 min: from 40.0 mM to 50.0 mM KOH
   - 16.1 - 17.0 min: 50.0 mM KOH
   - 17.0 - 17.1 min: from 50.0 mM to 1.0 mM KOH
   - 17.1 - 25.0 min: 1.0 mM KOH
- Flow rate: 0.25 mL/min
- Injection volume: 5 µL
- Column oven temperature: 30 °C
- Current ADRS Suppressor:
   - 0.0 min - 10.0 min: 8 mA
   - 10.0 min - 25.0 min: 22 mA
- Conductivity measuring cell temperature: 30 °C

The anion concentration was then calculated via suitable software (Chromeleon) by comparing the peak areas of standard and sample solutions using the component-specific calibration function.

The process conditions applied for each example are summarized in Table 1 below. The term '# c' means number of centrifuges used. Example 4C is copied as Example 7A for ease of comparison.

**Table 1: process conditions of Examples 1 to 8**

| **Example** | **# c** | **pH feed slurry** | **Baumé feed slurry** | **Chlorate feed slurry (ppm/DM)** | **Chloride feed slurry (ppm/DM)** | **Sulphate feed slurry (ppm/DM)** | **Ratio wash water/DM starch (m³/T)** | **Normalised ratio wash water/DM starch (m³/T)** |
|---|---|---|---|---|---|---|---|---|
| 1A | 6 | 8.8 | 11.9 | 61.8 | 1663 | 4762 | 2.2 | 0.36 |
| 1B | 6 | 9.6 | 12.2 | 105.3 | 2796 | 4198 | 2.2 | 0.36 |
| 2A | 6 | 9.8 | 12.8 | 33.3 | - | - | 1.8 | 0.30 |
| 2B | 6 | 8.6 | 13.4 | 14.7 | - | - | 1.8 | 0.30 |
| 3A | 5 | 10.5 | 13.7 | 130.9 | 3314 | - | 2.0 | 0.40 |
| 3B | 6 | 8.3 | 13.9 | 54.3 | 2581 | - | 2.4 | 0.40 |
| 4A | 6 | 7.9 | 11.8 | 26.2 | - | - | 2.2 | 0.37 |
| 4B | 6 | 8.8 | 14.7 | 11.4 | - | - | 2.2 | 0.37 |
| 4C | 6 | 9.0 | 15.2 | 12.2 | - | - | 2.2 | 0.37 |
| 5A | 6 | 7.2 | 14.2 | 73.5 | - | 6060 | 2.3 | 0.38 |
| 5B | 4 | 7.2 | 13.8 | 31.2 | | 3387 | 2.0 | 0.51 |
| 6A | 6 | 6.4 | 14.0 | 66.8 | 2569 | 7840 | 2.5 | 0.41 |
| 6B | 4 | 6.4 | 13.5 | 57.6 | 2230 | 5859 | 2.2 | 0.54 |
| 7A | 6 | 9.0 | 15.2 | 12.2 | - | - | 2.2 | 0.37 |
| 7B | 6 | 9.0 | 13.6 | 22.0 | - | - | 1.9 | 0.31 |
| 8A | 5 | 11.7 | 10.6 | 10.4 | 2459 | 238 | 1.4 | 0.29 |
| 8B | 5 | 7.6 | 10.3 | 5.5 | 3098 | 11727 | 1.5 | 0.30 |
| 8C | 4 | 11.7 | 10.1 | 11.0 | 2991 | 1122 | 1.5 | 0.38 |

The results obtained are shown in the tables below.

**Table 2: results of Examples 1A and 1B**

| **Example** | **Concentrated slurry HPx** | **Chlorate reduction (% to feed)** | **Chloride reduction (% to feed)** | **Sulphate reduction (% to feed)** | **C5000 tan delta reduction (% to feed)** |
|---|---|---|---|---|---|
| 1A | HP1 | 45 | 44 | 48 | - |
| | HP2 | 69 | 63 | 69 | - |
| | HP3 | 82 | 75 | 80 | |
| | HP4 | 91 | 83 | 87 | - |
| | HP5 | 95 | 87 | 91 | |
| | HP6 | 98 | - | - | 26 |
| 1B | HP1 | 56 | 49 | 53 | - |
| | HP2 | 83 | 79 | 81 | - |
| | HP3 | 92 | 87 | 90 | |
| | HP4 | 98 | 93 | 93 | - |
| | HP5 | 99 | 97 | 97 | |
| | HP6 | 100 | 97 | 97 | 37 |

From Examples 1A and 1B can be inferred that there is a more efficient contaminant removal for all contaminants (chlorate, chloride and sulphate) at higher pH values for a fixed normalized ratio of wash water to DM starch, but that there also is somewhat of property loss, although still acceptable, at the higher pH value of pH= 9.6. This is confirmed in Examples 2A and 2B for chlorate, as shown in Table 3.

**Table 3: results of Examples 2A and 2B**

| **Example** | **Concentrated slurry HPx** | **Chlorate reduction (% to feed)** |
|---|---|---|
| 2A | HP1 | 76 |
| | HP2 | 88 |
| | HP3 | 94 |
| | HP4 | 96 |
| | HP5 | 98 |
| | HP6 | 99 |
| 2B | HP1 | 58 |
| | HP2 | 82 |
| | HP3 | 91 |
| | HP4 | 97 |
| | HP5 | 99 |
| | HP6 | 100 |

From Examples 3A and 3B can be inferred that the efficiency of contaminant removal for chlorate and chloride increases at higher pH values for a fixed normalized ratio of wash water to DM starch, as shown in Table 4.

**Table 4: results of Examples 3A and 3B**

| **Example** | **Concentrated slurry HPx** | **Chlorate reduction (% to feed)** | **Chloride reduction (% to feed)** |
|---|---|---|---|
| 3A | HP1 | 65 | 62 |
| | HP2 | 88 | 84 |
| | HP3 | 96 | 93 |
| | HP4 | 99 | 94 |
| | HP5 | 100 | 96 |
| 3B | HP1 | - | - |
| | HP2 | 78 | 77 |
| | HP3 | - | - |
| | HP4 | 96 | 89 |
| | HP5 | - | - |
| | HP6 | 99 | 93 |

This is confirmed in Examples 4A, 4B and 4C, for chlorate, as shown in Table 5 below.

**Table 5: results of Examples 4A, 4B and 4C**

| **Example** | **Concentrated slurry HPx** | **Chlorate reduction (% to feed)** |
|---|---|---|
| 4A | HP1 | - |
| | HP2 | 73 |
| | HP3 | - |
| | HP4 | 93 |
| | HP5 | - |
| | HP6 | 99 |
| 4B | HP1 | 56 |
| | HP2 | 83 |
| | HP3 | 92 |
| | HP4 | 96 |
| | HP5 | 98 |
| | HP6 | 98 |
| 4C | HP1 | 67 |
| | HP2 | 85 |
| | HP3 | 93 |
| | HP4 | 97 |
| | HP5 | 98 |
| | HP6 | 99 |

**Table 6: results of Examples 5A and 5B**

| **Example** | **Concentrated slurry HPx** | **Chlorate reduction (% to feed)** | **Sulphate reduction (% to feed)** |
|---|---|---|---|
| 5A | HP2 | 78 | 80 |
| | HP4 | 95 | 92 |
| | HP6 | 99 | 98 |
| 5B | HP2 | 88 | 79 |
| | HP4 | 100 | 92 |

**Table 7: results of Examples 6A and 6B**

| **Example** | **Concentrated slurry HPx** | **Chlorate reduction (% to feed)** | **Chloride reduction (% to feed)** | **Sulphate reduction (% to feed)** |
|---|---|---|---|---|
| 6A | HP2 | 77 | 76 | 81 |
| | HP4 | 95 | 89 | 92 |
| | HP6 | 98 | 93 | 95 |
| 6B | HP2 | 80 | 75 | 77 |
| | HP4 | 98 | 92 | 93 |

Examples 7A and 7B also confirm this finding for two different nozzle diameters of the nozzle centrifuges used for the same pH, wash water flow and number of centrifuges. The nozzles of all centrifuges in Example 7A were identical in diameter. The nozzles of all centrifuges in Example 7B were also identical in diameter, and their diameter was was 6% bigger than the diameter of the nozzles in Example 7A. Example 4C is copied as Example 7A for ease of comparison.

**Table 8: results of Examples 7A and 7B**

| **Example** | **Concentrated slurry HPx** | **Chlorate reduction (% to feed)** |
|---|---|---|
| 7A | HP1 | 67 |
| | HP2 | 85 |
| | HP3 | 93 |
| | HP4 | 97 |
| | HP5 | 98 |
| | HP6 | 99 |
| 7B | HP1 | 51 |
| | HP2 | 80 |
| | HP3 | 91 |
| | HP4 | 96 |
| | HP5 | 99 |
| | HP6 | 100 |

Examples 8A and 8B finally again demonstrate that there is a more efficient contaminant removal for chloride at higher pH values for a comparable normalized ratio of wash water to DM starch. However, at higher pH , there is also an increased property or functionality loss, expressed by the Brabender delta95 data included. Besides, Examples 8A and 8C demonstrate a possible disadvantageous effect of reducing the amount of centrifuges, which is reflected in the higher normalized wash water/DM starch ratio, on the removal of contaminants.

**Table 9: results of Examples 8A, 8B and 8C. Note: the delta 95 viscosity increase as measured on the material used to prepare the feed slurry was deemed to be 100%. If after washing the starch had a smaller delta 95 viscosity increase, then this was recalculated as the percentage of reduction compared to the delta 95 of the feed slurry starch. If there even was a decrease in viscosity, then this translated into a delta 95 loss being higher than 100%.**

| **Example** | **Concentrated slurry HPx** | **Chloride reduction (% to feed)** | **Brabender delta 95 loss (% to feed)** |
|---|---|---|---|
| 8A | HP1 | 55 | 37 |
| | HP2 | 77 | 146 |
| | HP3 | 87 | 175 |
| | HP4 | 92 | 187 |
| | HP5 | 94 | 197 |
| 8B | HP1 | 39 | 0 |
| | HP2 | 65 | 0 |
| | HP3 | 80 | 0 |
| | HP4 | 87 | 0 |
| | HP5 | 91 | 0 |
| 8C | HP1 | 54 | 42 |
| | HP2 | 77 | - |
| | HP3 | 88 | 203 |
| | HP4 | 93 | 210 |

## Claims

1. A process for preparing starch, comprising the steps of
a) providing a slurry containing a granular starch and contaminants and having a pH from 5.0-11.0;
b) washing the contaminants out of the slurry with water in a plurality of nozzle centrifuges provided in series, wherein the slurry is added to a first centrifuge of the series, and wash water is added to a last centrifuge of the series; and wherein each nozzle centrifuge separates an incoming slurry flow in a light fraction that comprises wash water and a washed out part of the contaminants, and a heavy fraction that comprises starch and a non-washed out part of the contaminants.

2. The process as claimed in claim 1, wherein the slurry before entering the first nozzle centrifuge of the series has a pH from 6.5-10.5, more preferably from 7.5-10.0, even more preferably from 8.5-9.5.

3. The process as claimed in claim 1 or 2, wherein a ratio of wash water flow added to at least one of the centrifuges, preferably the last centrifuge in m³/h to the dry matter (DM) starch flow in T/h added to the first centrifuge is at least 0.1 m³/T and at most 5 m³/T.

4. The process as claimed in any one of the preceding claims, wherein a normalized water ratio defined as the wash water flow added to at least one of the centrifuges, preferably the last centrifuge in m³/h divided by the dry matter starch flow added to the first centrifuge in T/h and the amount of centrifuges used is between 0.2-2.0, more preferably between 0.25-1.75.

5. The process as claimed in any one of the preceding claims, wherein the pH of the slurry is adjusted before entering a nozzle centrifuge of the series other than the first one.

6. The process as claimed in any one of the preceding claims, wherein the number of nozzle centrifuges in the series is from 2-8, more preferably from 3-7.

7. The process as claimed in any one of the preceding claims, wherein wash water of at least one but the last nozzle centrifuge originates from the light fraction of a subsequent nozzle centrifuge, preferably solely originates from the light fraction of a subsequent nozzle centrifuge.

8. The process as claimed in claim 7, wherein wash water of all but the last nozzle centrifuge originates from the light fraction of a subsequent nozzle centrifuge, preferably solely originates from the light fraction of a subsequent nozzle centrifuge.

9. The process as claimed in any one of the preceding claims, wherein wash water is added to each nozzle centrifuge in countercurrent flow to the flow of stabilized starch slurry entering the nozzle centrifuge.

10. The process as claimed in any one of the preceding claims, wherein fresh wash water not originating from one of the centrifuges is added to at least one nozzle centrifuge other than the last nozzle centrifuge.

11. The process as claimed in any one of the preceding claims, wherein the slurry added to the first centrifuge and the heavy fraction coming from a nozzle centrifuge entering a subsequent nozzle centrifuge is diluted with diluent water before entering the subsequent nozzle centrifuge.

12. The process as claimed in claim 11, wherein the diluent water before entering at least one nozzle centrifuge originates from the light fraction of a subsequent nozzle centrifuge, preferably solely originates from the light fraction of a subsequent nozzle centrifuge.

13. The process as claimed in claim 12, wherein the diluent water before entering all the nozzle centrifuge originates from the light fraction of a subsequent nozzle centrifuge, preferably solely originates from the light fraction of a subsequent nozzle centrifuge.

14. The process as claimed in any one of claims 11-13, wherein the slurry added to the first centrifuge and the heavy fraction coming from a nozzle centrifuge entering a subsequent nozzle centrifuge is diluted to a percentage dry matter of between 5-30%, more preferably of between 8-20%, and most preferably of between 10-15%.

15. The process as claimed in any one of the preceding claims, wherein the contaminants comprise an organic acid, a bisulfite, or hydrogen peroxide.

16. The process as claimed in any one of the preceding claims, wherein a nozzle diameter of at least one of the nozzle centrifuges ranges from 1.0 to 2.6 mm, more preferably from 1.4 to 2.2 mm, most preferably from 1.6 to 2.0 mm.

17. The process as claimed in any one of the preceding claims, wherein the washing is carried out at a temperature of between 5-40°C.

18. The process as claimed in any one of the preceding claims, wherein the slurry after washing is dried and optionally milled to obtain the starch.

## Patentansprüche

1. Verfahren zur Herstellung von Stärke, umfassend die Schritte
a) Bereitstellen einer Aufschlämmung, die eine körnige Stärke und Verunreinigungen enthält und einen pH-Wert von 5,0 bis 11,0 aufweist;
b) Auswaschen der Verunreinigungen aus der Aufschlämmung mit Wasser in einer Vielzahl von in Reihe bereitgestellten Düsenzentrifugen, wobei die Aufschlämmung in eine erste Zentrifuge der Reihe zugesetzt wird und Waschwasser in eine letzte Zentrifuge der Reihe zugesetzt wird; und wobei jede Düsenzentrifuge einen Aufschlämmungs-Zustrom in eine leichte Fraktion, die Waschwasser und einen ausgewaschenen Teil der Verunreinigungen umfasst, und eine schwere Fraktion, die Stärke und einen nicht-ausgewaschenen Teil der Verunreinigungen umfasst, trennt.

2. Verfahren nach Anspruch 1, wobei die Aufschlämmung vor Eintritt in die erste Düsenzentrifuge der Reihe einen pH-Wert von 6,5 bis 10,5, stärker bevorzugt von 7,5 bis 10,0, noch bevorzugter von 8,5 bis 9,5 aufweist.

3. Verfahren nach Anspruch 1 oder 2, wobei ein Verhältnis des mindestens einer der Zentrifugen, vorzugsweise der letzten Zentrifuge, zugesetzten Waschwasserstromes, in m³/h, zum der ersten Zentrifuge zugesetzten Trockensubstanz(DM)-Stärkestrom, in T/h (Tonne/Stunde), mindestens 0,1 m³/T und höchstens 5 m³/T beträgt.

4. Verfahren nach einem der vorhergehenden Ansprüche, wobei ein normalisiertes Wasserverhältnis, das definiert ist als der mindestens einer der Zentrifugen, vorzugsweise der letzten Zentrifuge, zugesetzte Waschwasserstrom, in m³/h, dividiert durch den der ersten Zentrifuge zugesetzten Trockensubstanz-Stärkestrom, in T/h, und die Anzahl der verwendeten Zentrifugen, zwischen 0,2 und 2,0, besonders bevorzugt zwischen 0,25 und 1,75 beträgt.

5. Verfahren nach einem der vorhergehenden Ansprüche, wobei der pH-Wert der Aufschlämmung vor Eintritt in eine Düsenzentrifuge der Reihe, außer der ersten Düsenzentrifuge, eingestellt wird.

6. Verfahren nach einem der vorhergehenden Ansprüche, wobei die Anzahl an Düsenzentrifugen in der Reihe 2 bis 8, besonders bevorzugt 3 bis 7, beträgt.

7. Verfahren nach einem der vorhergehenden Ansprüche, wobei Waschwasser von mindestens einer, außer der letzten, Düsenzentrifuge aus der leichten Fraktion einer nachfolgenden Düsenzentrifuge stammt, vorzugsweise ausschließlich aus der leichten Fraktion einer nachfolgenden Düsenzentrifuge stammt.

8. Verfahren nach Anspruch 7, wobei Waschwasser von allen, außer der letzten, Düsenzentrifugen aus der leichten Fraktion einer nachfolgenden Düsenzentrifuge stammt, vorzugsweise ausschließlich aus der leichten Fraktion einer nachfolgenden Düsenzentrifuge stammt.

9. Verfahren nach einem der vorhergehenden Ansprüche, wobei Waschwasser jeder Düsenzentrifuge im Gegenstrom zu dem in die Düsenzentrifuge eintretenden Strom von stabilisierter Stärkeaufschlämmung zugesetzt wird.

10. Verfahren nach einem der vorhergehenden Ansprüche, wobei mindestens einer Düsenzentrifuge, außer der letzten Düsenzentrifuge, frisches Waschwasser zugesetzt wird, das nicht aus einer der Zentrifugen stammt.

11. Verfahren nach einem der vorhergehenden Ansprüche, wobei die der ersten Zentrifuge zugesetzte Aufschlämmung und die aus einer Düsenzentrifuge kommende schwere Fraktion, die in eine nachfolgende Düsenzentrifuge eintritt, vor Eintritt in die nachfolgende Düsenzentrifuge mit Verdünnungswasser verdünnt werden.

12. Verfahren nach Anspruch 11, wobei das Verdünnungswasser vor Eintritt in mindestens eine Düsenzentrifuge aus der leichten Fraktion einer nachfolgenden Düsenzentrifuge stammt, vorzugsweise ausschließlich aus der leichten Fraktion einer nachfolgenden Düsenzentrifuge stammt.

13. Verfahren nach Anspruch 12, wobei das Verdünnungswasser vor Eintritt in alle der Düsenzentrifugen aus der leichten Fraktion einer nachfolgenden Düsenzentrifuge stammt, vorzugsweise ausschließlich aus der leichten Fraktion einer nachfolgenden Düsenzentrifuge stammt.

14. Verfahren nach einem der Ansprüche 11 bis 13, wobei die der ersten Zentrifuge zugesetzte Aufschlämmung und die aus einer Düsenzentrifuge kommende schwere Fraktion, die in eine nachfolgende Düsenzentrifuge eintritt, auf einen Trockensubstanz-Prozentanteil zwischen 5 und 30 %, bevorzugter zwischen 8 und 20 %, und am meisten bevorzugt zwischen 10 und 15 % verdünnt werden.

15. Verfahren nach einem der vorhergehenden Ansprüche, wobei die Verunreinigungen eine organische Säure, ein Bisulfit oder Wasserstoffperoxid umfassen.

16. Verfahren nach einem der vorhergehenden Ansprüche, wobei ein Düsendurchmesser mindestens einer der Düsenzentrifugen im Bereich von 1,0 bis 2,6 mm, stärker bevorzugt von 1,4 bis 2,2 mm, ganz besonders bevorzugt von 1,6 bis 2,0 mm liegt.

17. Verfahren nach einem der vorhergehenden Ansprüche, wobei man das Waschen bei einer Temperatur zwischen 5 und 40 °C durchführt.

18. Verfahren nach einem der vorhergehenden Ansprüche, wobei die Aufschlämmung nach dem Waschen getrocknet und gegebenenfalls gemahlen wird, um die Stärke zu erhalten.

## Revendications

1. Procédé de préparation d'amidon comprenant les étapes de
a) fourniture d'une suspension contenant un amidon granulaire et des contaminants et présentant un pH de 5,0 à 11,0 ;
b) lavage des contaminants hors de la suspension avec de l'eau dans une pluralité de centrifugeuses à buses fournies en série, la suspension étant ajoutée à une première centrifugeuse de la série, et de l'eau de lavage étant ajoutée à une dernière centrifugeuse de la série ; et dans lequel chaque centrifugeuse à buses sépare un flux de suspension entrant en une fraction légère qui comprend de l'eau de lavage et une partie éliminée par lavage des contaminants, et une fraction lourde qui comprend un amidon et une partie non éliminée par lavage des contaminants.

2. Procédé selon la revendication 1, dans lequel la suspension avant d'entrer dans la première centrifugeuse à buses de la série a un pH de 6,5 à 10,5, plus préférablement de 7,5 à 10,0, encore plus préférablement de 8,5 à 9,5.

3. Procédé selon la revendication 1 ou 2, dans lequel le rapport entre le flux d'eau de lavage ajouté à au moins l'une des centrifugeuses, de préférence la dernière centrifugeuse en m³/h sur le flux d'amidon de matière sèche (DM) en T/h ajouté à la première centrifugeuse est d'au moins 0,1 m³/T et d'au plus 5 m³/T.

4. Procédé selon l'une quelconque des revendications précédentes, dans lequel un rapport d'eau normalisée défini comme le flux d'eau de lavage ajouté à au moins l'une des centrifugeuses, de préférence la dernière centrifugeuse en m³/h divisée par le flux d'amidon de matière sèche ajouté à la première centrifugeuse en T/h et la quantité de centrifugeuses utilisées est compris entre 0,2 et 2,0, plus préférablement entre 0,25 et 1,75.

5. Procédé selon l'une quelconque des revendications précédentes, dans lequel le pH de la suspension est ajusté avant d'entrer dans une centrifugeuse à buses de la série autre que la première.

6. Procédé selon l'une quelconque des revendications précédentes, dans lequel le nombre de centrifugeuses à buses dans la série est de 2 à 8, plus préférablement de 3 à 7.

7. Procédé selon l'une quelconque des revendications précédentes, dans lequel de l'eau de lavage d'au moins une centrifugeuse à buses, sauf la dernière, provient de la fraction légère d'une centrifugeuse à buses subséquente, de préférence provient uniquement de la fraction légère d'une centrifugeuse à buses subséquente.

8. Procédé selon la revendication 7, dans lequel de l'eau de lavage de toutes les centrifugeuses à buses, sauf la dernière, provient de la fraction légère d'une centrifugeuse à buses subséquente, de préférence uniquement de la fraction légère d'une centrifugeuse à buses subséquente.

9. Procédé selon l'une quelconque des revendications précédentes, dans lequel de l'eau de lavage est ajoutée à chaque centrifugeuse à buses dans un flux à contre-courant par rapport au flux de la suspension d'amidon stabilisée entrant dans la centrifugeuse à buses.

10. Procédé selon l'une quelconque des revendications précédentes, dans lequel de l'eau de lavage fraîche ne provenant pas de l'une des centrifugeuses est ajoutée à au moins une centrifugeuse à buses autre que la dernière centrifugeuse à buses.

11. Procédé selon l'une quelconque des revendications précédentes, dans lequel la suspension ajoutée à la première centrifugeuse et la fraction lourde provenant d'une centrifugeuse à buses entrant dans une centrifugeuse à buses subséquente sont diluées avec de l'eau de dilution avant d'entrer dans la centrifugeuse à buses subséquente.

12. Procédé selon la revendication 11, dans lequel l'eau de dilution avant d'entrer dans au moins une centrifugeuse à buses provient de la fraction légère d'une centrifugeuse à buses subséquente, de préférence provient uniquement de la fraction légère d'une centrifugeuse à buses subséquente.

13. Procédé selon la revendication 12, dans lequel l'eau de dilution, avant l'entrée dans toutes les centrifugeuses à buses, provient de la fraction légère d'une centrifugeuse à buses subséquente, de préférence provient uniquement de la fraction légère d'une centrifugeuse à buses subséquente.

14. Procédé selon l'une quelconque des revendications 11 à 13, dans lequel la suspension ajoutée à la première centrifugeuse et la fraction lourde provenant d'une centrifugeuse à buses entrant dans une centrifugeuse à buses subséquente sont diluées jusqu'à un pourcentage de matière sèche compris entre 5-30 %, plus préférablement entre 8-20 %, et le plus préférablement entre 10-15 %.

15. Procédé selon l'une quelconque des revendications précédentes, dans lequel les contaminants comprennent un acide organique, un bisulfite, ou du peroxyde d'hydrogène.

16. Procédé selon l'une quelconque des revendications précédentes, dans lequel un diamètre de buse d'au moins l'un des centrifugeurs à buses varie de 1,0 à 2,6 mm, préférablement de 1,4 à 2,2 mm, le plus préférablement de 1,6 à 2,0 mm.

17. Procédé selon l'une quelconque des revendications précédentes, dans lequel le lavage est réalisé à une température comprise entre 5 et 40°C.

18. Procédé selon l'une quelconque des revendications précédentes, dans lequel la suspension après lavage est séchée et éventuellement broyée pour obtenir l'amidon.
